# EUROPEAN PATENT APPLICATION

(11) **EP 3 333 947 A1**
(43) Date of publication of application: **13.06.2018**
(21) Application number: 16832821.9
(22) Date of filing: 25.07.2016
(51) Int. Cl.: H01M 4/86, C22C 1/08, C22C 19/05, H01M 4/88, H01M 8/02, H01M 8/0202, H01M 8/10

(54) **METAL POROUS BODY, FUEL CELL, AND METHOD FOR MANUFACTURING METAL POROUS BODY**

(30) Priority: 04.08.2015 JP 2015154120; 28.01.2016 JP 2016014144
(71) Applicant: Sumitomo Electric Industries, Ltd., Osaka-shi, Osaka 541-0041 (JP)
(72) Inventor: OKUNO, Kazuki, Itami-shi Hyogo 664-0016 (JP); HIGASHINO, Takahiro, Itami-shi Hyogo 664-0016 (JP); AWAZU, Tomoyuki, Itami-shi Hyogo 664-0016 (JP); MAJIMA, Masatoshi, Itami-shi Hyogo 664-0016 (JP)
(74) Representative: Boult Wade Tennant
(86) International application number: PCT/JP2016/071696
(87) International publication number: WO 2017/022542

(57) **Abstract**

A plate-like porous metal body having a three-dimensional mesh-like structure and containing nickel (Ni). The content of the nickel in the porous metal body is 50% by mass or more. The porous metal body has a thickness of 0.10 mm or more and 0.50 mm or less.

## Description

### Technical Field

The present invention relates to a porous metal body, a fuel cell, and a method for producing a porous metal body.

The present application claims a priority to Japanese Patent Application No. 2015-154120 filed on August 4, 2015 and Japanese Patent Application No. 2016-014144 filed on January 28, 2016, which are incorporated herein by reference in their entirety.

### Background Art

Polymer electrolyte fuel cells (PEFCs) that include an ion-exchange membrane serving as an electrolyte have been used for cogeneration. Accordingly, automobiles that use a PEFC as a power source are being developed.

A fundamental structure of a PEFC includes an anode, a membrane, and a cathode. The membrane is an ion-exchange membrane, which is typically a fluorine-containing exchange membrane including a sulfone group. Improvements in the properties of the membrane have promoted the use of PEFCs.

A PEFC includes plural electric cells each including an anode, a cathode, and a gas diffusion layer and a separator that are disposed on the rear surface of each of the anode and the cathode. The electric cells are stacked on top of one another to form a multilayer structure (e.g., see PTL 1). The operating temperature of a PEFC is set to about 70°C to 110°C in consideration of the performance of the PEFC, the removal of product water from the system by evaporation, the service life of the PEFC, and the like. Increasing the operating temperature enhances the discharging characteristic of the PEFC.

Increasing the operating temperature is advantageous in that, when the PEFC is used for cogeneration, a large amount of exhaust heat is produced, but makes the service life of the PEFC shorter than that of a PEFC operated at a lower temperature.

The gas diffusion layer commonly includes carbon paper produced by forming carbon fibers into a nonwoven fabric-like form. The carbon paper also serves as a current collector. The gas diffusion layer also includes a carbon plate, which serves also as a separator, having grooves formed therein in order to facilitate the feed and discharge of a gas. As described above, the gas diffusion layer commonly includes carbon paper and has grooves. The carbon paper also reduces the likelihood of a membrane electrode assembly (MEA) being inserted into the grooves formed in the separator.

### Citation List

### Patent Literature

PTL 1: Japanese Unexamined Patent Application Publication No. 2011-129265

### Summary of Invention

A porous metal body according to an embodiment of the present invention is a plate-like porous metal body having a three-dimensional mesh-like structure, the porous metal body containing nickel (Ni). The content of the nickel in the porous metal body is 50% by mass or more. The porous metal body has a thickness of 0.10 mm or more and 0.50 mm or less.

### Brief Description of Drawings

[Fig. 1] Figure 1 is a diagram schematically illustrating an example of a structure of a cell included in a fuel cell according to an embodiment of the present invention.
[Fig. 2] Figure 2 is a graph illustrating the current-voltage characteristics of the batteries A to F prepared in Examples.

### Description of Embodiments

### [Problems to Be Solved in Present Disclosure]

The porosity of a carbon plate used as a separator of a polymer electrolyte fuel varies with the amount of grooves formed in the carbon. The porosity of carbon plates in practical use is about 50%. That is, grooves are formed in substantially 1/2 the surface of the carbon plate. The grooves have a rectangular shape having a width of about 500 µm.

In order to uniformly feed a gas into an MEA at a low pressure, it is preferable to increase the width and depth of the grooves. It is also preferable to increase the proportion of the grooves per unit area. However, increasing the proportion of the grooves formed in a separator disadvantageously reduces the conductivity of the separator and, consequently, the battery characteristics. Since the conductivity of a separator greatly affects the battery characteristics, it is preferable to reduce the proportion and depth of the grooves in consideration of the battery characteristics.

Forming a larger number of grooves having a smaller width increases the uniformity with which a gas is fed into an MEA. However, the smaller the width of the grooves, the higher the likelihood of the MEA being inserted into the grooves by the pressure applied to the MEA when electric cells are integrated into one piece. In such a case, the deformation of the MEA and the degradation in the function of the grooves may occur. The above negative impacts become more significant when the size and number of the cells are increased, that is, when the size of electrodes and the number of cells are increased and the amount of load required is accordingly increased.

As described above, the proportion of grooves formed in a separator is preferably increased in consideration of the feed of a gas, while the proportion of the grooves is preferably reduced in consideration of electrical properties. In addition, since the grooves need to be formed with high accuracy, the process for forming the grooves may become complex. This increases the production costs of a separator. Furthermore, since the grooves are formed in one direction, if the grooves are clogged with water or the like, the migration of a gas through the grooves may be blocked.

Accordingly, the inventors of the present invention studied a technique in which a porous metal body having a three-dimensional mesh-like structure is used as a gas diffusion layer. As a result, it was found that the porous metal body having a three-dimensional mesh-like structure has a high porosity, a larger number of channels through which a gas diffuses, and a larger cross-sectional area of the gas channels than common separators having grooves formed therein, in which a gas can flow in only one direction, and that using the porous metal body may reduce the pressure loss. However, the common porous metal bodies have relatively large thicknesses and are likely to disadvantageously increase the volume of a fuel cell. It was found that there is room for improving the porous metal body in order to produce a fuel cell having a larger capacity and a large volume output density.

Accordingly, it is an object of the present invention to address the above issues and to provide a porous metal body that is suitably used as a gas diffusion layer and capable of increasing the output capacity of a fuel cell while reducing the size of the fuel cell.

### Advantageous Effects of Invention

According to the present invention, a porous metal body that is suitably used as a gas diffusion layer and capable of increasing the output capacity of a fuel cell while reducing the size of the fuel cell may be provided.

### [Description of Embodiments of the Present Invention]

Embodiments of the present invention are described below.
(1) A porous metal body according to an embodiment of the present invention is
   a plate-like porous metal body having a three-dimensional mesh-like structure, the porous metal body containing nickel (Ni),
   the content of the nickel in the porous metal body being 50% by mass or more,
   the porous metal body having a thickness of 0.10 mm or more and 0.50 mm or less.
   Hereinafter, the "porous metal body having a three-dimensional mesh-like structure" may be referred to simply as "porous metal body".
   The porous metal body described in (1) above has a sufficiently high porosity and a smaller thickness than the common porous metal bodies. Consequently, when the porous metal body is used as a gas diffusion layer of a fuel cell, the fuel cell has a small size and a high output capacity.
(2) A porous metal body according to an embodiment of the present invention is the porous metal body described in (1) above, the porous metal body having a porosity of 55% or more and 85% or less.
   The porous metal body described in (2) above may achieve higher gas diffusibility when used as a gas diffusion layer of a fuel cell.
(3) A porous metal body according to an embodiment of the present invention is the porous metal body described in (1) or (2) above, the porous metal body further containing chromium (Cr), the content of the chromium in the porous metal body being 1% by mass or more and 50% by mass or less.
   The porous metal body described in (3) above may have higher corrosion resistance.
(4) A fuel cell according to an embodiment of the present invention is a fuel cell including the porous metal body described in any one of (1) to (3) above, the porous metal body serving as a gas diffusion layer.
   The fuel cell described in (4) above is small and has a high output capacity and a high power generation capacity per unit volume.
(5) A method for producing a porous metal body according to an embodiment of the present invention is
   a method for producing a plate-like porous metal body having a three-dimensional mesh-like structure, the porous metal body containing nickel (Ni), the method including:
   a step in which an electrical conduction material containing a carbon powder is applied onto a surface of a skeleton of a plate-like resin shaped body having a three-dimensional mesh-like structure in order to make the surface of the skeleton of the resin shaped body conductive;
   a step in which a nickel-coating layer is deposited on the resin shaped body such that the content of the nickel in the porous metal body is 50% by mass or more so as to form a resin structure;
   a step in which the resin shaped body is removed from the resin structure in order to prepare a porous metal body; and
   a step in which the porous metal body is rolled to a thickness of 0.10 mm or more and 0.50 mm or less.

   The porous metal body described in any one of (1) to (3) above can be produced by the method for producing a porous metal body described in (5) above.
(6) A method for producing a porous metal body according to an embodiment of the present invention is the method for producing a porous metal body described in (5) above, in which the carbon powder is a powder of carbon black, active carbon, or graphite.

The porous metal body described in any one of (1) to (3) above can be produced at a lower cost by the method for producing a porous metal body described in (6) above.

In the case where a porous metal body that contains chromium similarly to the porous metal body described in (3) above is produced, in the method for producing a porous metal body described in (5) or (6) above, a chromium powder or a chromium oxide powder is added to the electrical conduction treatment material or a chromium-coating layer is formed such that the chromium content is 1% by mass or more and 50% by mass or less.

Specifically, the porous metal body containing chromium may be produced by, for example, any one of the methods described in (i) to (iii) below.
(i) A method for producing a plate-like porous metal body having a three-dimensional mesh-like structure, the porous metal body containing at least nickel (Ni) and chromium (Cr), the method including:
   a step in which an electrical conduction material containing a chromium powder or a chromium oxide powder is applied onto a surface of a skeleton of a plate-like resin shaped body having a three-dimensional mesh-like structure such that the chromium content in the porous metal body is 1% by mass or more and 50% by mass or less in order to make the surface of the skeleton of the resin shaped body conductive; a step in which a nickel-coating layer is deposited on the resin shaped body such that the nickel content in the porous metal body is 50% by mass or more so as to form a resin structure;
   a step in which the resin shaped body is removed from the resin structure in order to prepare a porous metal body; and
   a step in which the porous metal body is rolled to a thickness of 0.10 mm or more and 0.50 mm or less.

   In the method for producing a porous metal body described in (i) above, an electrical conduction treatment material containing a chromium powder or a chromium oxide powder is used in order to make the surface of the skeleton of the resin shaped body conductive. This eliminates the need to form a chromium-coating layer in the subsequent step and enables a porous metal body to be produced at a low cost.
(ii) A method for producing a plate-like porous metal body having a three-dimensional mesh-like structure, the porous metal body containing at least nickel (Ni) and chromium (Cr), the method including:
   a step in which an electrical conduction material containing a carbon powder is applied onto a surface of a skeleton of a plate-like resin shaped body having a three-dimensional mesh-like structure in order to make the surface of the skeleton of the resin shaped body conductive;
   a step in which a nickel-coating layer and a chromium-coating layer are deposited on the resin shaped body such that the nickel content in the porous metal body is 50% by mass or more and the chromium content in the porous metal body is 1% by mass or more and 50% by mass or less so as to form a resin structure;
   a step in which the resin shaped body is removed from the resin structure in order to prepare a porous metal body; and
   a step in which the porous metal body is rolled to a thickness of 0.10 mm or more and 0.50 mm or less.

   In the method for producing a porous metal body described in (ii) above, the order in which the nickel-coating layer and the chromium-coating layer are formed on the surface of the skeleton of the resin shaped body is not limited; either of the nickel-coating layer and the chromium-coating layer may be formed first. However, it is preferable to form the nickel-coating layer first in consideration of ease of handling of the plated base, because the nickel content in the porous metal body is higher than the chromium content.
(iii) A method for producing a plate-like porous metal body having a three-dimensional mesh-like structure, the porous metal body containing at least nickel (Ni) and chromium (Cr), the method including:
   a step in which an electrical conduction material containing a carbon powder is applied onto a surface of a skeleton of a plate-like resin shaped body having a three-dimensional mesh-like structure in order to make the surface of the skeleton of the resin shaped body conductive;
   a step in which a nickel-coating layer is deposited on the resin shaped body such that the nickel content in the porous metal body is 50% by mass or more so as to form a resin structure;
   a step in which the resin shaped body is removed from the resin structure in order to prepare a porous nickel body;
   a step in which a powder of a chromium-source and a powder of an anti-sintering agent are charged into the porous nickel body, which is subsequently heated in a reducing atmosphere in order to diffuse chromium into the porous nickel body such that the chromium content in the porous nickel body is 1% by mass or more and 50% by mass or less, and the remaining powder is removed by cleaning in order to prepare a porous metal body; and
   a step in which the porous metal body is rolled to a thickness of 0.10 mm or more and 0.50 mm or less.

The porous metal body according to an embodiment of the present invention may also contain, in addition to nickel and chromium, tin, aluminum, copper, iron, tungsten, titanium, cobalt, phosphorus, boron, manganese, silver, gold, and the like intentionally or inevitably without impairing the advantageous effects of the present invention. It is preferable to limit the content of tin and tungsten in the porous metal body to be less than 5% by mass, because a porous metal body that contains tin or tungsten has a brittle skeleton and is likely to fracture during rolling.

### [Details of Embodiments of Present Invention]

Specific examples of the porous metal body, etc. according to embodiments of the present invention are described below. It is intended that the scope of the present invention be not limited by the following examples, but determined by the appended claims, and include all variations of the equivalent meanings and ranges to the claims.

### <Porous Metal Body>

The porous metal body according to an embodiment of the present invention is a plate-like porous metal body having a three-dimensional mesh-like structure, the porous metal body containing 50% by mass or more nickel (Ni), and is a thin porous metal body having a thickness of 0.10 mm or more and 0.50 mm or less.

The porous metal body according to an embodiment of the present invention has a high porosity and a thin plate-like shape. Therefore, using the porous metal body as a gas diffusion layer of a fuel cell enhances the gas feed-discharge capacity of the fuel cell and allows a reduction in the size of the fuel cell. In other words, the porous metal body can be used instead of the grooves formed in separators included in common fuel batteries. The porous metal body is preferably used as, for example, a gas diffusion layer disposed on the hydrogen-electrode side of a solid oxide fuel cell (SOFC) or a gas diffusion layer disposed on the hydrogen-electrode side of a PEFC.

The porous metal body, which contains 50% by mass or more nickel, has a high toughness and can be subjected to rolling. The porous metal body may intentionally contain metal components other than nickel or may contain inevitable impurities such that the capability of the porous metal body to be rolled is not impaired. Examples of metals that may be intentionally added to the porous metal body include chromium (Cr), tin (Sn), aluminum (Al), copper (Cu), iron (Fe), tungsten (W), titanium (Ti), cobalt (Co), phosphorus (P), boron (B), manganese (Mn), silver (Ag), and gold (Au).

The thickness of the porous metal body is 0.10 mm or more and 0.50 mm or less. When the thickness of the porous metal body is 0.10 mm or more and 0.50 mm or less, using the porous metal body as a gas diffusion layer of a fuel cell reduces the size of the fuel cell. The porous metal body also reduces the amount of loss in the pressure of a gas and has high gas diffusibility. Consequently, the porous metal increases the output capacity of the fuel cell. If the thickness of the porous metal body is less than 0.10 mm, the porosity of the porous metal body is excessively low and the capability of the porous metal body to feed a gas into the fuel cell is small. If the thickness of the porous metal body is more than 0.50 mm, the porous metal body may fail to reduce the size of the fuel cell by a sufficient degree. From the above viewpoints, the thickness of the porous metal body is more preferably 0.20 mm or more and 0.40 mm or less.

The porosity of the porous metal body according to an embodiment of the present invention is preferably 55% or more and 85% or less. When the porosity of the porous metal body is 55% or more, using the porous metal body as a gas diffusion layer included in a fuel cell further reduces the amount of loss in the pressure of the gas. When the porosity of the porous metal body is 85% or less, the porous metal body has a further high gas diffusibility when used as a gas diffusion layer of a fuel cell. This is because, since the porous metal body has a three-dimensional mesh-like structure, a reduction in the porosity of the porous metal body results in an increase in the likelihood of the gas diffusing as a result of hitting against the skeleton of the porous metal body. Moreover, a porous metal body having a porosity of 85% or less has a suitable conductivity. From the above viewpoints, the porosity of the porous metal body according to an embodiment of the present invention is more preferably 70% or more and 82% or less and is further preferably 75% or more and 80% or less.

It is preferable that the porous metal body according to an embodiment of the present invention further contain chromium (Cr) and the chromium content in the porous metal body be 1% by mass or more and 50% by mass or less. Setting the chromium content in the porous metal body to 1% by mass or more may enhance the corrosion resistance of the porous metal body. This enables the porous metal body to serve also as a gas diffusion layer disposed on the air-electrode side of a PEFC or an SOFC. Setting the chromium content in the porous metal body to 50% by mass or less may limit an increase in the electric resistance of the porous metal body. From the above viewpoints, the chromium content in the porous metal body is more preferably 2% by mass or more and 40% by mass or less and is further preferably 4% by mass or more and 30% by mass or less.

The weight of the nickel coating deposited on the porous metal body according to an embodiment of the present invention is preferably about 250 g/m² or more and 950 g/m² or less. In the case where the porous metal body contains metal components other than nickel, the total weight of the metal coatings and the nickel coating is preferably about 250 g/m² or more and 950 g/m² or less.

Setting the total weight of metal coatings to 250 g/m² or more increases the strength and conductivity of the porous metal body to sufficiently high degrees. Setting the total weight of metal coatings to 950 g/m² or less limits increases in the production costs and the weight of the porous metal body. From the above viewpoints, the total weight of metal coatings is more preferably about 350 g/m² or more and 850 g/m² or less and is further preferably about 450 g/m² or more and 750 g/m² or less.

The size of pores formed in the plate-like porous metal body according to an embodiment of the present invention as viewed from overhead is preferably 100 µm or more and 650 µm or less. Setting the pore size to 100 µm or more reduces the loss in the pressure of the fuel gas which occurs when the fuel gas is fed. Setting the pore size to 650 µm or less increases the uniformity with which the fuel gas is diffused into an MEA. From the above viewpoints, the size of pores formed in the porous metal body is more preferably 200 µm or more and 550 µm or less and is further preferably 300 µm or more and 500 µm or less. The term "as viewed from overhead" used herein refers to the case where the planar porous metal body is viewed two-dimensionally in the thickness direction. The same applies hereinafter.

The average pore size is determined from the inverse of the number of cells formed in the porous metal body. The number of the cells is determined by counting the number of cells which are exposed at the surface of the porous metal body and intersect a one-inch line drawn on the surface of the porous metal body. The number of the cells is expressed in cell/inch. Note that 1 inch is equal to 2.54 centimeters.

### <Fuel cell>

A fuel cell according to an embodiment of the present invention is a fuel cell that includes the porous metal body according to the above embodiment of the present invention which serves as a gas diffusion layer. The type of the fuel cell is not limited; the fuel cell may be either a PEFC or an SOFC.

Hereinafter, a PEFC is described as an example of the fuel cell.

The ion-exchange membrane, etc. included in the PEFC may be common ones.

For example, the membrane electrode assembly, which includes an ion-exchange membrane and a catalyst layer joined to each other, may be a commercial one. Such a commercial membrane electrode assembly may be used directly. The anode and the cathode are gas diffusion electrodes that each include a platinum catalyst supported thereon at about 0.5 mg/cm2. The above components are integrated into one piece with an ion-exchange membrane that is Nafion (registered trademark) 112.

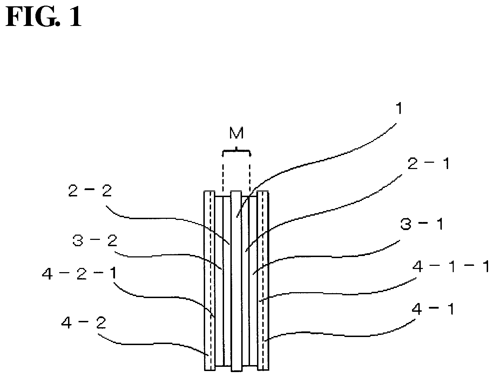

Figure 1 is a schematic cross-sectional view of an electric cell included in the PEFC.

In Fig. 1, a membrane electrode assembly (MEA) M includes an ion-exchange membrane 1 and gas diffusion electrodes disposed on the respective surfaces of the ion-exchange membrane 1, that is, active carbon layers (2-1 and 2-2) that contain a platinum catalyst. One of the active carbon layers is a hydrogen electrode that serves as an anode, and the other is an air electrode that serves as a cathode. In Fig. 1, current collectors (3-1 and 3-2) serve as current collectors and gas diffusion layers of the respective electrodes and may be composed of, for example, commercial water-repellent carbon paper. The carbon paper may be, for example, water-repellent carbon paper having a porosity of about 50% and a fluororesin content of about 15%.

In Fig. 1, separators (4-1 and 4-2) may be, for example, commercial graphite plates. Gas diffusion layers (4-1-1 and 4-2-1) are the porous metal bodies according to an embodiment of the present invention and serve also as gas feed-discharge channels. Since the porous metal body according to an embodiment of the present invention has a considerably smaller thickness than common porous metal bodies, it is possible to reduce the size of the fuel cell.

Although Fig. 1 illustrates an electric cell, fuel batteries in practical use include plural cells stacked on top of one another with a separator interposed between each pair of adjacent cells in order to achieve a desired voltage. The cells are typically connected in series and arranged such that the cathode of a cell faces the anode of another cell adjacent to the cell across a separator. The electric cells are integrated into one piece by being pressed using bolts, nuts, and the like attached to the periphery of the multilayer body.

### <Method for Producing Porous Metal Body>

The porous metal body according to an embodiment of the present invention may be produced by various methods. Examples of the production method include the methods described in (5) and (6) and the methods described in (i) to (iii) above.

Common porous metal bodies having a three-dimensional mesh-like structure which are used as a component of batteries are produced so as to have a high porosity of about 95% in order to increase the amount of active material that can be supported on electrodes. In contrast, one of the primary purpose of the porous metal body according to an embodiment of the present invention is to achieve suitable feed, discharge, and diffusion of a gas when used as a gas diffusion layer of a fuel cell and to reduce the size of the fuel cell. Accordingly, a modification is made to a common method for producing a porous metal body.

The method for producing a porous metal body is described in further detail below.

### (Resin Shaped Body Having Three-Dimensional Mesh-Like Structure)

A plate-like resin shaped body having a three-dimensional mesh-like structure which is used as a base may be any porous resin shaped body that is publicly known or commercially available. Examples of such a resin shaped body include a foam, nonwoven fabric, felt, and woven fabric that are made of a resin. The above resin shaped bodies may be used in combination with one another as needed. The material for the resin shaped body is not limited but is preferably a material that can be removed by incineration subsequent to deposition of a metal on the resin shaped body. The resin shaped body is preferably composed of a flexible material, because a stiff sheet-like resin shaped body is particularly likely to be bent while the resin shaped body is in service.

The resin shaped body is preferably composed of a resin foam. Examples of the resin foam include a urethane foam, a styrene foam, and a melamine foam. In particular, a urethane foam is preferable, because it has a particularly high porosity.

The porosity of the resin shaped body is generally, but not limited to, about 60% or more and 97% or less and is preferably about 80% or more and 96% or less. The thickness of the resin shaped body is not limited and may be set appropriately depending on the application of the porous metal body. The thickness of the resin shaped body is generally set to about 600 µm or more and 5000 µm or less and is preferably set to about 800 µm or more and 2000 µm or less. If the thickness of the resin shaped body is 500 µm or less, the plate-like shape of the resin shaped body may become deformed because the resin shaped body has a considerably high porosity.

Hereinafter, an example case where a resin foam is used as a resin shaped body having a three-dimensional mesh-like structure is described.

### (Electrical Conduction Treatment)

The type of electrical conduction treatment is not limited and may be any treatment in which a conductive layer is formed on the surface of the skeleton of the resin shaped body. Examples of a material constituting the conductive layer (conductive coating layer) include metals, such as nickel, tin, chromium, copper, iron, tungsten, titanium, and stainless steel, and powders of carbon, such as a carbon powder.

Specifically, preferable examples of the electrical conduction treatment include application of a conductive paint prepared by adding a binder to a powder of a metal, such as nickel, tin, or chromium, or a graphite powder; electroless plating; and gas-phase treatments, such as sputtering, vapor deposition, and ion plating.

Electroless nickel plating may be performed by, for example, immersing a resin foam in a publicly known electroless nickel plating bath, such as an aqueous nickel sulfate solution containing sodium hypophosphite serving as a reductant. Before being immersed in the plating bath, the resin shaped body may optionally be immersed in an activation liquid (cleaning liquid produced by Japan Kanigen Co., Ltd.) that contains a trace amount of palladium ions.

Sputtering of nickel or chromium may be performed by, for example, attaching the resin shaped body to a substrate holder and subsequently applying a direct voltage between the holder and a target (nickel or chromium) while introducing an inert gas. Ionized particles of the inert gas are brought into collision with nickel or chromium, and particles of nickel or chromium blown off by the inert gas are deposited on the surface of the resin shaped body.

A conductive paint containing a carbon powder, a metal powder, or the like can be applied to the resin shaped body by, for example, applying a mixture of a conductive powder (e.g., a powder of a metal, such as stainless steel, or a powder of carbon, such as crystalline graphite or amorphous carbon black) and a binder to the surface of the skeleton of the resin shaped body. In the above method, a powder of chromium or chromium oxide may be used in combination with a carbon powder. In the case where a powder of chromium or chromium oxide is used, the content of chromium in the porous metal body is adjusted to be 1% by mass or more and 50% by mass or less. This eliminates the need to conduct a chromium-plating step.

In the case where a powder of chromium or chromium oxide is used, the particle size of the powder is preferably about 0.1 µm or more and 10 µm or less and is more preferably about 0.5 µm or more and 5 µm or less in consideration of diffusibility into nickel.

The carbon powder may be a powder of carbon black, active carbon, graphite, or the like. The material for the carbon powder is not limited. Carbon black may be used in order to achieve uniform conductivity. A graphite fine powder may be used in the case where the strength of the conductive coating layer is to be considered. It is preferable to use the above carbon powders, which includes active carbon, in a mixture. A thickener commonly used for preparing slurries, such as carboxymethyl cellulose (CMC), may optionally be added to the conductive paint. The above slurry is applied to the skeleton of the resin shaped body that has an adjusted thickness and has been cut into a plate-like or strip-like shape. Then, the resin shaped body is dried. Thus, the surface of the skeleton of the resin shaped body can be made conductive.

In the case where the conductive coating layer contains nickel, it is suitable that the conductive coating layer be disposed consistently on the surface of the resin shaped body. The coating weight is normally, but not limited to, about 5 g/m² or more and 15 g/m² or less and is preferably about 7 g/m² or more and 10 g/m² or less.

### (Formation of Nickel-Coating Layer)

Either electroless nickel plating or nickel electroplating may be used for forming the nickel-coating layer. It is preferable to use nickel electroplating since nickel electroplating achieves high efficiency. Nickel electroplating may be performed in accordance with a conventional method. The plating bath used for nickel electroplating may be a publicly known or commercially available one, such as a Watts bath, a chlorination bath, or a sulfamic acid bath.

The resin structure including the conductive layer disposed on the surface thereof, which is formed by electroless plating or sputtering as described above, is immersed in the plating bath. After the resin structure has been connected to the cathode and the nickel counter electrode plate has been connected to the anode, a direct current or a pulsed intermittent current is applied in order to form a nickel-coating layer on the conductive layer.

The coating weight of the nickel-electroplating layer is adjusted such that the nickel content in the final composition of the porous metal body is 50% by mass or more.

The weight of nickel coating included in the porous metal body is preferably about 250 g/m² or more and 950 g/m² or less. In the case where the porous metal body contains metal components other than nickel, that is, the porous metal body is composed of a nickel alloy, the total coating weight of the metal components is preferably about 250 g/m² or more and 950 g/m² or less.

### (Formation of Chromium-Coating Layer)

In the case where a chromium-coating layer is formed on the resin structure, the chromium-coating layer can be formed by, for example, the following method. Specifically, the chromium-coating layer may be formed in accordance with a publicly known chromium-plating method. Publicly known or commercially available plating baths, such as a hexavalent chromium bath or a trivalent chromium bath, may be used. The porous body that is to be plated is immersed in the chromium plating bath and connected to the cathode. A chromium plate that serves as a counter electrode is connected to the anode. Subsequently, a direct current or a pulsed intermittent current is applied to form a chromium-coating layer.

The coating weight of the chromium-coating layer is adjusted such that the nickel content in the final composition of the porous metal body is 50% by mass or more and the chromium content in the final composition of the porous metal body is 1% by mass or more and 50% by mass or less.

### (Circulation of Plating Solution During Plating)

In general, it is difficult to deposit a metal uniformly inside a base, such as the resin shaped body having a three-dimensional mesh-like structure. It is preferable to circulate the plating solution in order to reduce the likelihood of the plating solution not adhering to the inside of the resin shaped body and the difference between the amounts of metal deposited on the inside and outside of the resin shaped body. The circulation of the plating solution can be made by, for example, using a pump or using a fan disposed inside the plating vessel. Spraying the plating solution onto the resin shaped body using the above methods or arranging the resin shaped body in the vicinity of a suction port advantageously promotes the formation of a stream of the plating solution inside the resin shaped body.

### (Removal of Resin Shaped Body)

Examples of the method for removing the resin shaped body used as a base from the resin structure including the metal-coating layer disposed thereon include, but are not limited to, treatment using a chemical and removal by incineration. In the case where the resin shaped body is removed by incineration, for example, the resin structure is heated in an oxidizing atmosphere, such as air atmosphere, at about 600°C or more.

The resulting porous metal body is optionally heated in a reducing atmosphere in order to reduce the metal. As a result, a porous metal body composed primarily of nickel is produced.

### (Chromization)

Instead of adding chromium to the conductive coating layer disposed on the surface of the skeleton of the resin shaped body or depositing a chromium-coating layer on the surface of the skeleton of the resin shaped body, the surface of the skeleton of the resin shaped body may be chromized to convert the porous metal body into a porous nickel-chromium alloy body.

Chromization is a treatment in which chromium is diffused and permeated into the nickel film and may be performed by a publicly known method. For example, a powder packing method in which the porous metal body is packed with a permeation material that is a mixture of a powder of a chromium source, a powder of an anti-sintering agent (an alumina powder), and a halide, and heated in a reducing atmosphere may be employed. Alternatively, the permeation material is disposed away from the porous metal body, and heating is performed in a reducing atmosphere to form a gas of the permeation material, which is permeated into nickel contained in the surface of the porous metal body.

Subsequent to the diffusion of chromium into nickel, cleaning is performed to remove the remaining powder. Thus, a porous metal body composed of a nickel-chromium alloy can be produced.

The chromium content in the nickel-chromium alloy can be adjusted by changing the amount of time during which heating is performed in the chromization treatment. The chromium content in the final product, that is, the porous metal body, is adjusted to be 1% by mass or more and 50% by mass or less.

### (Step in Which Porous Metal Body Is Rolled)

Since the porous metal body according to the above embodiment of the present invention has a high toughness as described above, the thickness of the porous metal body can be adjusted by rolling. Accordingly, the porous metal body can be rolled to a thickness of 0.10 mm or more and 0.50 mm or less by, for example, using a roller pressing machine or by flat-sheet pressing. Rolling the porous metal body increases the uniformity in the thickness of the porous metal body and reduces surface irregularities. Rolling the porous metal body also reduces the porosity of the porous metal body.

While the plate-like porous body becomes elongated by a small amount when rolled, the deformation of the porous body is small enough not to cause a change in the average size of the pores as viewed from overhead. For the above reasons, the average size of pores as viewed from overhead which are formed in the plate-like porous body that has not yet been rolled is, similarly to the average size of pores formed in the rolled porous body, preferably 100 µm or more and 650 µm or less, is more preferably 200 µm or more and 550 µm or less, and is further preferably 300 µm or more and 500 µm or less.

The porosity of the porous metal body that has not yet been rolled is preferably 60% or more and 97% or less and is more preferably 80% or more and 96% or less. The porosity of the porous metal body that has been rolled to a thickness of 0.10 mm or more and 0.50 mm or less is preferably 55% or more and 85% or less, is more preferably 70% or more and 82% or less, and is further preferably 75% or more and 80% or less.

In the case where the porous metal body is used as a gas diffusion layer of a fuel cell, the thickness of the porous metal body may be adjusted to be slightly larger than the thickness of the gas diffusion layer included in the fuel cell such that the thickness of the porous metal body is reduced to 0.10 mm or more and 0.50 mm or less as a result of the porous metal body becoming deformed by a pressure applied to the porous metal body when the porous metal body is attached to the fuel cell. The thickness of the porous metal body may be adjusted to be slightly larger than the thickness of the gas diffusion layer included in the fuel cell by rolling the porous metal body by a slight degree. This further increases the adhesion between the MEA and the gas diffusion layer (porous metal body) included in the fuel cell.

### <Method and Apparatus for Producing Hydrogen>

The porous metal body according to the above embodiment of the present invention can be suitably used, in addition to as a fuel cell, for producing hydrogen by electrolysis of water. The methods for producing hydrogen can be roughly classified into the following three groups: [1] hydrogen production method in which alkaline water is electrolyzed, [2] hydrogen production method in which a PEM is used, and [3] hydrogen production method in which an SOEC is used. The porous metal body may be used in any of the above methods.

The hydrogen production method [1] in which alkaline water is electrolyzed is a method in which an anode and a cathode are immersed in a strong alkaline aqueous solution and a voltage is applied between the anode and the cathode to electrolyze water. Using the porous metal body as an electrode increases the area at which the electrode comes into contact with water and thereby increases the efficiency of electrolysis of water.

In the hydrogen production method in which alkaline water is electrolyzed, the size of pores formed in the porous metal body as viewed from overhead is preferably 100 µm or more and 5000 µm or less. Setting the size of pores of the porous metal body as viewed from overhead to 100 µm or more reduces the likelihood of the pores of the porous metal body becoming clogged with gas bubbles of hydrogen and oxygen generated by electrolysis and reducing the area at which the electrode comes into contact with water.

Setting the size of pores of the porous metal body as viewed from overhead to 5000 µm or less increases the surface area of the electrode to a sufficient degree and thereby increases the efficiency of electrolysis of water. From the same viewpoints as above, the size of pores of the porous metal body as viewed from overhead is more preferably 400 µm or more and 4000 µm or less.

The thickness of the porous metal body and the metal content in the porous metal body may be changed adequately in accordance with the size of the facility because an increase in the area of the electrode may cause warpage and the like. Plural porous metal bodies having different pore sizes may be used in order to purge the gas bubbles from the pores and maintain a certain surface area.

The hydrogen production method [2] in which a PEM is used is a method in which water is electrolyzed using a polymer electrolyte membrane. In this method, an anode and a cathode are disposed on the respective surfaces of a polymer electrolyte membrane and a voltage is applied between the electrodes while water is fed on the anode side. Hydrogen ions generated as a result of electrolysis of water are migrated onto the cathode side through the polymer electrolyte membrane and collected in the form of hydrogen on the cathode side. The operating temperature is about 100°C. Although the above structure is similar to that of a PEFC, which produces electric power from hydrogen and oxygen and discharges water, the operation in this method is completely opposite to that of a PEFC. Since the anode side and the cathode side are completely separated from each other, highly pure hydrogen can be collected advantageously. Since the anode and the cathode need to be capable of passing water and a hydrogen gas therethrough, the electrodes need to be a conductive porous body.

Since the porous metal body according to the above embodiment of the present invention has a high porosity and a good conductivity, the porous metal body can be suitably used also for electrolyzing water with a PEM as for PEFCs. In the hydrogen production method in which a PEM is used, the size of pores of the porous metal body as viewed from overhead is preferably 100 µm or more and 650 µm or less. Setting the size of pores of the porous metal body as viewed from overhead to 100 µm or more reduces the likelihood of the pores of the porous metal body becoming clogged with gas bubbles of hydrogen and oxygen generated by electrolysis and reducing the area at which the polymer electrolyte membrane comes into contact with water. Setting the size of pores of the porous metal body as viewed from overhead to 650 µm or less enables the porous metal body to have a sufficient water holding capacity and reduces the likelihood of water passing through the porous metal body without reacting. This increases the efficiency of electrolysis of water. From the same viewpoints as above, the size of pores of the porous metal body as viewed from overhead is more preferably 200 µm or more and 550 µm or less and is further preferably 300 µm or more and 500 µm or less.

Although the thickness of the porous metal body and the metal content in the porous metal body may be changed adequately in accordance with the size of the facility, they are preferably adjusted such that the porosity of the porous metal body is 30% or more because a large pressure loss occurs when water is passed through a porous metal body having an excessively small porosity. In the hydrogen production method in which a PEM is used, the polymer electrolyte membrane and electrodes are communicated with one another by pressure bonding. Accordingly, the metal content in the porous metal body needs to be adjusted such that an increase in electric resistance which is caused by the deformation or creep of the porous metal body during pressurization is negligible in practical use. The metal content in the porous metal body is preferably about 250 g/m² or more and 950 g/m² or less, is more preferably about 350 g/m² or more and 850 g/m² or less, and is further preferably about 450 g/m² or more and 750 g/m² or less. Plural porous metal bodies having different pore sizes may be used in order to maintain a certain porosity and good electrical connection.

The hydrogen production method [3] in which an SOEC is used is a method in which water is electrolyzed using a solid oxide electrolyte membrane. The structure of the electrolyzer depends on whether the electrolyte membrane is a proton-conducting membrane or an oxygen ion-conducting membrane. In the case where an oxygen ion-conducting membrane is used, hydrogen is generated on the cathode side on which water vapor is fed, which may reduce the purity of hydrogen. Accordingly, it is preferable to use a proton-conducting membrane from the viewpoint of hydrogen production.

In this method, an anode and a cathode are disposed on the respective sides of a proton-conducting membrane and a voltage is applied between the electrodes while water vapor is fed on the anode side. Hydrogen ions generated as a result of electrolysis of water are migrated onto the cathode side through the solid oxide electrolyte membrane and only hydrogen is collected on the cathode side. The operating temperature is about 600°C to 800°C. Although the above structure is similar to that of an SOFC, which produces electric power from hydrogen and oxygen and discharges water, the operation in this method is completely opposite to that of an SOFC.

Since the anode and the cathode need to be capable of passing water vapor and a hydrogen gas therethrough, the electrodes need to be conductive porous bodies that are, in particular, capable of withstanding a high-temperature oxidizing atmosphere when used on the anode side. Since the porous metal body according to the above embodiment of the present invention has a high porosity, a good conductivity, and high resistance to oxidation and heat, the porous metal body can be suitably used also for electrolyzing water using an SOEC as for SOFCs. It is preferable to use an electrode composed of a Ni alloy containing a metal having high oxidation resistance, such as Cr, on the oxidizing-atmosphere side.

In the method for producing hydrogen in which an SOEC is used, the size of pores of the porous metal body as viewed from overhead is preferably 100 µm or more and 650 µm or less. Setting the size of pores of the porous metal body as viewed from overhead to 100 µm or more reduces the likelihood of the pores of the porous metal body becoming clogged with water vapor or hydrogen generated by electrolysis and reducing the area at which the solid oxide electrolyte membrane comes into contact with water vapor. Setting the size of pores of the porous metal body as viewed from overhead to 650 µm or less limits an excessive reduction in the pressure loss and reduces the likelihood of water vapor passing through the porous metal body without reacting sufficiently. From the same viewpoints as above, the size of pores of the porous metal body as viewed from overhead is more preferably 200 µm or more and 550 µm or less and is further preferably 300 µm or more and 500 µm or less.

Although the thickness of the porous metal body and the metal content in the porous metal body may be changed adequately in accordance with the size of the facility, they are preferably adjusted such that the porosity of the porous metal body is 30% or more because a large pressure loss occurs when water vapor is passed through a porous metal body having an excessively small porosity. In the hydrogen production method in which an SOEC is used, the solid oxide electrolyte membrane and electrodes are communicated with one another by pressure bonding. Accordingly, the metal content in the porous metal body needs to be adjusted such that an increase in electric resistance which is caused by the deformation or creep of the porous metal body during pressurization is negligible in practical use. The metal content in the porous metal body is preferably about 250 g/m² or more and 950 g/m² or less, is more preferably about 350 g/m² or more and 850 g/m² or less, and is further preferably about 450 g/m² or more and 750 g/m² or less. Plural porous metal bodies having different pore sizes may be used in order to maintain a certain porosity and good electrical connection.

### <Appendices>

The foregoing description covers the features described below.

### (Appendix 1)

A method for producing hydrogen, the method including electrolyzing water by using, as an electrode, a plate-like porous metal body having a three-dimensional mesh-like structure, the porous metal body containing nickel (Ni), in order to generate hydrogen,
the content of the nickel in the porous metal body being 50% by mass or more,
the porous metal body having a thickness of 0.10 mm or more and 0.50 mm or less.

### (Appendix 2)

The method for producing hydrogen described in Appendix 1, wherein the porous metal body has a porosity of 55% or more and 85% or less.

### (Appendix 3)

The method for producing hydrogen described in Appendix 1 or 2, wherein the porous metal body further contains chromium (Cr) and the content of the chromium in the porous metal body is 1% by mass or more and 50% by mass or less.

### (Appendix 4)

The method for producing hydrogen described in any one of Appendices 1 to 3, wherein the water is a strong-alkaline aqueous solution.

### (Appendix 5)

The method for producing hydrogen described in any one of Appendices 1 to 3, wherein a pair of the porous metal bodies are disposed on the respective sides of a polymer electrolyte membrane so as to come into contact with the polymer electrolyte membrane, the pair of the porous metal bodies serving as an anode and a cathode, and water is fed onto the anode side and electrolyzed to produce hydrogen on the cathode side.

### (Appendix 6)

The method for producing hydrogen described in any one of Appendices 1 to 3, wherein a pair of the porous metal bodies are disposed on the respective sides of a solid oxide electrolyte membrane so as to come into contact with the solid oxide electrolyte membrane, the pair of the porous metal bodies serving as an anode and a cathode, and water vapor is fed onto the anode side and electrolyzed to produce hydrogen on the cathode side.

### (Appendix 7)

An apparatus for producing hydrogen, the apparatus being capable of generating hydrogen by electrolyzing water,
the apparatus including a plate-like porous metal body having a three-dimensional mesh-like structure, the porous metal body containing nickel (Ni), the porous metal body serving as an electrode,
the content of the nickel in the porous metal body being 50% by mass or more,
the porous metal body having a thickness of 0.10 mm or more and 0.50 mm or less.

### (Appendix 8)

The apparatus for producing hydrogen described in Appendix 7, wherein the porous metal body has a porosity of 55% or more and 85% or less.

### (Appendix 9)

The apparatus for producing hydrogen described in Appendix 7 or 8, wherein the porous metal body further contains chromium (Cr) and the content of the chromium in the porous metal body is 1% by mass or more and 50% by mass or less.

### (Appendix 10)

The apparatus for producing hydrogen described in any one of Appendices 7 to 9, wherein the water is a strong-alkaline aqueous solution.

### (Appendix 11)

The apparatus for producing hydrogen described in any one of Appendices 7 to 9,
the apparatus including an anode and a cathode that are disposed on the respective sides of a polymer electrolyte membrane,
the anode and the cathode being in contact with the polymer electrolyte membrane,
the apparatus being capable of electrolyzing water fed onto the anode side to produce hydrogen on the cathode side,
at least one of the anode and the cathode being the porous metal body.

### (Appendix 12)

The apparatus for producing hydrogen described in any one of Appendices 7 to 9,
the apparatus including an anode and a cathode that are disposed on the respective sides of a solid oxide electrolyte membrane,
the anode and the cathode being in contact with the solid oxide electrolyte membrane,
the apparatus being capable of electrolyzing water vapor fed onto the anode side to produce hydrogen on the cathode side,
at least one of the anode and the cathode being the porous metal body.

### EXAMPLES

The present invention is described in further detail on the basis of the examples below. The following examples are illustrative, and the porous metal body, etc. according to the present invention are not limited by the examples. The scope of the present invention is determined by the appended claims and includes all variations of the equivalent meanings and ranges to the claims.

### [Example 1]

### - Preparation of Porous Metal Body -

### (Electrical Conduction Treatment of Resin Shaped Body Having Three-Dimensional Mesh-Like Structure)

A sheet composed of urethane resin foam having a porosity of 96%, an average pore size of 450 µm, and a thickness of 2.0 mm was used as a resin shaped body having a three-dimensional mesh-like structure. A graphite fine powder having an average particle size of 0.5 µm and a 20-mass% aqueous polypropylene emulsion were mixed with each other such that the proportion of the resin to graphite was 4.5% by mass. To the resulting mixture, 0.1% by mass of carboxymethyl cellulose, which served as a thickener, was added to prepare a slurry. The above urethane resin foam was immersed in the slurry. After the urethane resin foam had been removed from the slurry, it was passed between rollers in order to remove excess slurry. The urethane resin foam was subsequently dried. Thus, the surface of the skeleton of the urethane resin foam was made conductive. The amount of conductive coating layer deposited on the surface of the skeleton of the urethane resin foam, which was composed of carbon and polypropylene, was 80 g/m².

### (Nickel Plating)

The conductive urethane resin foam was electroplated with nickel by a publicly known method in which a sulfamine acid bath is used. Nickel electroplating was performed at a current density of 250 mA/cm² with a bath having a publicly known composition, that is, a composition primarily containing 430 g/L of nickel sulfamate, 7 g/L of nickel chloride, and 32 g/L of boric acid. Hereby, a resin structure including the resin shaped body and a nickel-coating layer deposited on the surface of the skeleton of the resin shaped body was formed. The weight of nickel coating included in the resin structure including the nickel-coating layer was 550 g/m².

### (Removal of Resin Shaped Body)

The resin structure was heated at 750°C in air in order to remove the resin shaped body by incineration. Subsequently, heating was performed at 850°C for 10 minutes in a hydrogen atmosphere in order to reduce partially oxidized nickel and to perform annealing.

Hereby, a porous metal body (porous nickel body) having a three-dimensional mesh-like structure was formed. The porous metal body had a porosity of about 97%. The thickness of the porous metal body was 2.0 mm, which is substantially the same as that of the resin shaped body used.

### (Alloying with Chromium)

A publicly known method was used for alloying nickel with chromium to form a nickel-chromium alloy. First, a chromium powder, ammonium chloride, and alumina were mixed with one another at a ratio of 90:1:9 in terms of percent by mass. The resulting mixture was charged into the porous metal body prepared above. The porous metal body was then heated at 800°C in a hydrogen atmosphere in order to diffuse chromium into the porous metal body and make an alloy. It was confirmed that an alloy was made homogeneously such that the chromium content in the alloy was 21% by mass. The porous nickel-chromium alloy body had a porosity of about 96%. The total weight of metal coatings included in the porous nickel-chromium alloy body was 700 g/m².

### (Adjustment of Thickness of Porous Metal Body)

The porous nickel-chromium alloy body was rolled with a roller pressing machine to a thickness of 0.5 mm. Hereby, a porous metal body was formed. The porous metal body had a porosity of about 84%.

### - Preparation of Fuel cell -

The porous metal body prepared above was used as a gas diffusion layer and a gas feed-discharge channel included in a PEFC (electric cell).

An electric cell was assembled using the porous metal body and a commercially available MEA. The porous metal body was cut into a 5 cm × 5 cm piece. An electric cell illustrated in Fig. 1 was prepared. Specifically, the membrane electrode assembly (MEA) M was interposed between a pair of current collectors 3-1 and 3-2 composed of carbon paper. A pair of gas diffusion layers 4-1-1 and 4-2-1 that are the porous metal bodies were disposed on the respective outer surfaces of the current collectors 3-1 and 3-2 to form an electric cell. A gasket and concave carbon shaped bodies were used in order to prevent leakage at the air electrode and the hydrogen electrode. The periphery of the electric cell was fixed by being tightened using bolts and nuts in order to enhance the contact between the components of the electric cell and to prevent the leakage of hydrogen or air from the cell. While the thickness of the carbon shaped body used as a separator is commonly about 1 to 2 mm because the electric cell is used for producing a laminated battery in practical use, the thickness of the carbon shaped body used in this example was set to 10 mm in order to maintain a strength high enough to withstand tightening. Hereinafter, this cell is referred to as "battery A".

### [Example 2]

A porous nickel body having a porosity of 96% and a nickel-coating weight of 700 g/m² was prepared as in Example 1. The porous nickel body was rolled with a roller pressing machine to a thickness of 0.50 mm. Hereby, a porous metal body was formed. The porous metal body 2 had a porosity of about 84%.

An electric cell was prepared as in Example 1, except that the porous metal body disposed on the air-electrode side was the porous nickel-chromium alloy body and the porous metal body disposed on the hydrogen-electrode side was the porous nickel body. Hereinafter, this cell is referred to as "battery B".

### [Example 3]

A porous nickel-chromium alloy body having a coating weight of 450 g/m² was prepared as in Example 1, except that the weight of nickel coating was changed to 350 g/m² and the chromium concentration was changed to 22% by mass. The porous nickel-chromium alloy body was rolled with a roller pressing machine to a thickness of 0.12 mm. Hereby, a porous metal body was formed. The porous metal body had a porosity of 58%.

A battery C was prepared as in Example 1, except that the above porous metal body was disposed on each electrode.

### [Comparative Example 1]

An electric cell was prepared using, as a gas diffusion layer, a general-purpose separator (carbon shaped body) having grooves formed therein. Specifically, the MEA and the carbon paper that are the same as those used in the preparation of the battery A were used for an anode and a cathode. The depth and width of the grooves were 1 mm. The distance between a pair of adjacent grooves was 1 mm. Therefore, the apparent porosity was substantially 50%. Hereinafter, this cell is referred to as "battery D".

### [Comparative Example 2]

The porous nickel-chromium alloy body prepared in Example 3, which had a coating weight of 450 g/m², was rolled with a roller pressing machine to a thickness of 0.08 mm to form a porous metal body. The porous metal body had a porosity of 37%.

A battery E was prepared as in Example 1, except that the above porous metal body was disposed on each electrode.

### [Comparative Example 3]

The porous nickel-chromium alloy body prepared in Example 1, which had a coating weight of 700 g/m², was rolled with a roller pressing machine to a thickness of 0.70 mm to form a porous metal body. The porous metal body had a porosity of 88%.

A battery F was prepared as in Example 1, except that the above porous metal body was disposed on each electrode.

### [Evaluation]

### - Current-Voltage Characteristics -

The discharging characteristic of each of the batteries A to F was determined while hydrogen was fed to the anode and air was fed to the cathode.

The gases were fed to the respective electrodes with an apparatus capable of making adjustment in accordance with the load. The periphery temperature of the electrodes was set to 25°C. The operating temperature was set to 80°C.

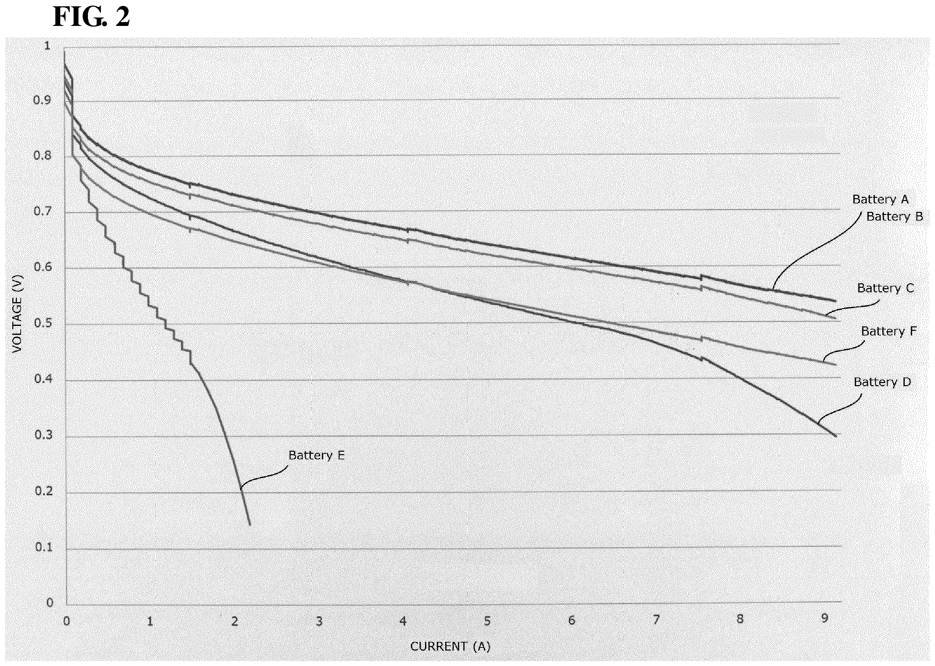

Figure 2 is a graph illustrating the current-voltage characteristic of each of the batteries A to F. In Fig. 2, the vertical axis represents voltage (unit: V) and the horizontal axis represents current (unit: A).

As is clear from the graph illustrated in Fig. 2, changes in the cell-discharge voltages of the batteries A and B with current were substantially equal to each other. The voltage of the battery C prepared in Example 3 was slightly lower, but maintained to be 0.5 V or more even in a high-current-density region.

In contrast, the voltages of the batteries prepared in Comparative examples started changing at the beginning of the test. The cell voltages of the batteries D and F were reduced to 0.5 V when the current was about 6 A. This is because the battery D had a lower conductivity than the batteries A to C since the current collectors included in the battery D were composed of carbon. Although the battery F was composed of materials having the same qualities as those of the batteries A to C in terms of conductivity, the gas-feeding capability of the battery F was poor since the thickness of the porous metal body was inappropriate.

The voltage of the battery E started decreasing significantly at the beginning of the test and reached 0.2 V when the current was about 2 A. Consequently, the battery E stopped generating power. This is because a considerably high pressure was required for feeding hydrogen and air to the porous metal body since the thickness of the porous metal body was reduced to an excessive degree and the gas-feeding capability of the battery E was poor. While fluctuations in the discharge voltage which were caused as a result of the product water being retained in the gas diffusion-feed channels were confirmed in the batteries D and E, the phenomenon did not occur in the batteries A to C and F.

The batteries A to D were subsequently discharged at a discharge current density of 500 mA/cm² continuously for 5000 hours. The results of the test confirmed that the discharge voltages of the batteries D and F were reduced by 7% and 5%, respectively, while the discharge voltages of the batteries A to C did not decrease.

Subsequently, the discharging of the batteries and feeding of the gas to the electrodes were stopped. The temperatures of the batteries were reduced to room temperature, and the batteries were left to stand for 10 days. Then, the amount of time required for each of the batteries discharging at 500 mA/cm² again was measured. The results of the measurement confirmed that the batteries A to C each required 30 minutes or less for reaching the voltage at which the battery was paused, while the battery D required 75 minutes. This is presumably because the gas diffusion layers of the batteries A to C were a porous metal bodies, which reduced the likelihood of water produced as a result of discharge of the battery being retained in the gas diffusion layer, that is, the gas feed-discharge channel, and blocking the flow of the gas.

Subsequent to the evaluation of discharging characteristic, the cells were decomposed in order to make an inspection. The results of the inspection confirmed that, in the battery D, the width portions of the grooves were inserted into the carbon paper and blocked the flow of the gas. In contrast, in the batteries A to C, where the gas diffusion layer was a porous metal body, the gas diffusion layer was not inserted into the carbon paper, in contrast to the case where grooves are formed.

### Reference Signs List

M MEMBRANE ELECTRODE ASSEMBLY (MEA)
1 ION-EXCHANGE MEMBRANE
2-1 GAS DIFFUSION ELECTRODE (ACTIVE CARBON LAYER CONTAINING PLATINUM CATALYST)
2-2 GAS DIFFUSION ELECTRODE (ACTIVE CARBON LAYER CONTAINING PLATINUM CATALYST)
3-1 CURRENT COLLECTOR
3-2 CURRENT COLLECTOR
4-1 SEPARATOR
4-1-1 GAS DIFFUSION LAYER
4-2 SEPARATOR
4-2-1 GAS DIFFUSION LAYER

## Claims

1. A plate-like porous metal body having a three-dimensional mesh-like structure, the porous metal body comprising nickel (Ni),
the content of the nickel in the porous metal body being 50% by mass or more,
the porous metal body having a thickness of 0.10 mm or more and 0.50 mm or less.

2. The porous metal body according to Claim 1, the porous metal body having a porosity of 55% or more and 85% or less.

3. The porous metal body according to Claim 1 or 2, the porous metal body further comprising chromium (Cr), the content of the chromium in the porous metal body being 1% by mass or more and 50% by mass or less.

4. A fuel cell comprising the porous metal body according to any one of Claims 1 to 3, the porous metal body serving as a gas diffusion layer.

5. A method for producing a plate-like porous metal body having a three-dimensional mesh-like structure, the porous metal body containing nickel (Ni), the method comprising:
a step in which an electrical conduction material containing a carbon powder is applied onto a surface of a skeleton of a plate-like resin shaped body having a three-dimensional mesh-like structure in order to make the surface of the skeleton of the resin shaped body conductive;
a step in which a nickel-coating layer is deposited on the resin shaped body such that the content of the nickel in the porous metal body is 50% by mass or more so as to form a resin structure;
a step in which the resin shaped body is removed from the resin structure in order to prepare a porous metal body; and
a step in which the porous metal body is rolled to a thickness of 0.10 mm or more and 0.50 mm or less.

6. The method for producing a porous metal body according to Claim 5, wherein the carbon powder is a powder of carbon black, active carbon, or graphite.
